# EUROPEAN PATENT SPECIFICATION

(11) **EP 0 759 958 B1**
(45) Date of publication and mention of the grant of the patent: **02.12.1998**
(21) Application number: 95916863.4
(22) Date of filing: 10.05.1995
(51) Int. Cl.: C09B 67/20, C09D 5/03, C09C 1/56

(54) **PIGMENT CONCENTRATE**
PIGMENTKONZENTRATE
CONCENTRE DE PIGMENT

(30) Priority: 11.05.1994 NL 9400781
(43) Date of publication of application: 05.03.1997
(73) Proprietor: Holland Colours N.V., NL-7323 RW Apeldoorn (NL)
(72) Inventor: WOLBRINK, Hendrikus, Johannes, Wilhelmus, NL-7391 VT Twello (NL); KNOL, Jan, Dirk, NL-7345 CJ Wenum Wiesel (NL)
(74) Representative: van der Kloet-Dorleijn, Geertruida W.F., Drs.
(86) International application number: NL9500167
(87) International publication number: WO9531507

(56) References cited:
- CH-A- 485 007
- FR-A- 2 311 826
- US-A- 3 325 425
- US-A- 3 759 864
- US-A- 4 168 180

## Description

The invention relates to a method for preparing a pigment concentrate by comminution of pigment particles in the presence of an aqueous binder having a co-solvent content of 0-5%, and a dispersant, to form a stable paste or suspension, subjecting the paste or suspension formed to a drying treatment and collection of the pigment concentrate. Such a pigment concentrate is, more in particular, suitable for preparing a powder coating.

It should be noted that powder coatings are coating types which are applied by fluidized-bed dip coating or electrostatic spraying. This is followed by baking, as a result of which the powder forms a homogeneous film.

The powder coating is formed by a paint manufacturer by a pigment being mixed with a thermosetting coating system (comprising a resin and a hardener) and additives and/or fillers. The mixture obtained is then homogeneously fused in an extrusion device and is extruded. The extrudate is then cooled to room temperature as rapidly as possible and is finely ground to obtain a powder which can be used as a powder coating.

The drawback of such a powder coating however is that the powder formed may still have a suitable tinting strength reserve, tinting strength reserve being understood as meaning an amount of pigment whose staining power is not utilized.

While said tinting strength reserve can be reduced by the powder obtained being reground to obtain smaller particles, this does lead to higher preparation costs, while this additional processing may not directly lead to the desired end result.

A method for preparing a pigment concentrate suitable for the preparation of a powder coating has now been found, which does not have the abovementioned drawback.

The invention therefore relates to a method of the type mentioned at the outset, which is characterized in that, a binder having a glass transition temperature of from 25 to 55°C is used to form said paste or suspension, to obtain a pigment concentrate consisting of pigment, binder and dispersant. A binder having such a glass transition temperature is still found to be readily fusible in the extrusion device during the subsequent formation of a powder coating. It should be noted in this context that the temperature used in the extrusion device is usually from 110 to 130°C.

The drying treatment applied preferably consists of spray-drying; other drying treatments such as those employing a drying drum or a belt dryer for example may however also be used.

It should be noted that a stable paste or suspension has been obtained once the comminuted pigment particles no longer settle in the paste or suspension within a specific rest period of the paste or suspension. Usually, a period of 5-30 min. is chosen for this purpose.

During drying, only the amount of water present in the aqueous binder used is evaporated. The present process is therefore particularly environment-friendly, while it is moreover economically advantageous, since no material has to be recovered.

In the method according to the invention, in addition to the binder, a dispersant is also present. A dispersant makes it easier to obtain a stable suspension or paste. The amount of the dispersant to be used is not limited in any particular way; it primarily depends on the pigment type to be used in the concentrate. Normally, however, the pigment concentrate will contain 35-65% of pigment and 4-10% of dispersant, the remainder being (anhydrous) binder.

Expediently, a binder free of cosolvent is employed. In practice it was found, however, that a cosolvent content up to approximately 5% in the binder to be used gives fairly acceptable results. The best results are obtained, however, with a cosolvent content of 0-1%.

It is observed that the use of polymer binders in methods for the preparation of a pigment composition is known.

CH-A-485 007 describes the preparation of a pigment composition by dispersing pigments in the presence of a polymer binder, milling and spray-drying the composition.

US-A-4,168,180 discloses a process for preparation of pigments for powder coating applications, wherein a slurry comprising pigment, binder and surfactant is milled and then dried to obtain pigment granules. Said granules are thereafter mixed with powder coating resins.

A process comprising milling of a composition comprising pigments, binder and dispersing agents and subsequent spray-drying to form a dry free-flowing powder is described in US-A-3,325,425.

The above prior art processes, nevertheless, use polymer binders, i.e. polyethylene, styrene-methyl styrene copolymer, or acrylic resins respectively, which have glass, transition temperatures outside the claimed range.

In the method according to the invention the binder used is preferably a resin which has a glass transition temperature of from 25 to 55°C.

Binders found to be very expedient for use in the invention are polyester resins, epoxy resins, alkyd resins, polyurethane resins or combinations thereof. An epoxy resin is to be preferred, if the powder coating prepared therewith is to be formed into a coating film which has a high resistance to chemicals.

Preferably, a saturated polyester resin is used in which hydroxyl groups are present. Such a particularly suitable polyester resin has an acid value between 20 and 55, more in particular between 20 and 30.

It was further found that if the dispersant used is a surfactant having an HLB value of from 10 to 18, preferably from 13 to 17, a pigment concentrate can be obtained which after processing into a powder coating provides a product having very advantageous properties.

It should be noted that the HLB value is a measure for a hydrophilic/lipophilic balance of a substance and indicates how a substance behaves, in total, with respect to water and fat: with a lower HLB value a substance is oleophilic and can no longer be mixed with water; a higher HLB value, in contrast, results in a substance being hydrophilic, which may lead to the powder coating to be prepared being able to be washed off after having been applied to a substrate. The abovementioned HLB values are found to overcome such problems completely.

Preferably, the dispersant used is a nonionogenic surfactant, selected from the group consisting of the ethoxylated fatty alcohols, the ethoxylated nonylphenols and the ethylene oxide/propylene oxide copolymers and block copolymers.

Equally, however, an anionic surface-active phosphate ester or sodium or ammonium salts of polyelectrolytes can be used as the dispersant.

As stated above, in the present invention pigment particles are comminuted with the formation of a stable paste or suspension. It was found in practice that a paste or suspension is stable if a particle size of less than 15 µm is obtained; such a particle size is preferably produced with the use of a bead mill. Obviously, the pigment particles must always be smaller than the thickness of the coating film ultimately to be formed. Moreover, the particle size is important for the gloss of the coating film to be formed, in the sense that the gloss is determined by the particle size of the pigment particles and their dispersity.

The invention was found to be particular suitable for organic pigments; this is because it is very difficult to disperse such pigments during the manufacture of a powder coating. It was found, however, that as a result of them being used to make a pigment concentrate, such problems can be completely overcome.

Organic pigments which can be used, for example, are carbon black, phthalocyanine green, phthalocyanine blue, organic red and organic yellow.

The invention also relates to a method for forming a powder to be used as a powder coating, by mixing a pigment with a thermoplastic or thermosetting plastic, a hardener and additives, by blending, melting, extruding and finely grinding the mixture into a powder, which method is characterized in that the pigment used is a pigment concentrate prepared according to the method explained above.

The invention further relates to a method for coating a substrate with a powder coating by mixing pigment particles with a thermoplastic or thermosetting plastic, a hardener and additives, melting and extruding the mixture formed, comminuting the extrudate formed into a powder, applying the powder obtained to a substrate in the form of a thin layer and letting said thin layer harden with the formation of a thin film, which is characterized in that the pigment particles used are pigment concentrate particles obtained according to the invention.

The invention is explained below in more detail with reference to the following embodiments.

### EXAMPLE I

A mixture was formed from

| | |
|---|---|
| 23.3% by weight | of water, |
| 0.2% by weight | of anti-foaming agent (NopcoNXZ®, trade name of Henkel AG)¹⁾, |
| 0.1% by weight | of preservative (Parmatol A 23®, trade name of Schülke & Mayr GmbH)¹⁾, |
| 2.3% by weight | of dispersant (Serad FN 1566®, trade name of Servo for a surfactant)²⁾, |
| 42.1% by weight | of binder in the form of a 43% strength aqueous emulsion of a polyester resin (Uradil, trade name of DSM). |

| | |
|---|---|
| ¹⁾ additives, and | |
| ²⁾ surfactant comprising an ethoxylated nonylphenol having an HLB value of 13.5. | |

The mixture formed was admixed with 32.0% by weight of chromophthal blue ABR, the said pigment being dispersed with the aid of a bead mill to a maximum particle size of 10 microns. The paste was then sprayed, and the desired pigment concentrate particles were obtained which consisted of 61.0% by weight of pigment, 34.6% by weight of binder and 4.4% by weight of surfactant.

Processing the pigment concentrate formed to give a blue powder coating gave a powder coating having good hiding power and a gloss as desired, while the desired tinting was obtained directly over the entire substrate to be coated.

### EXAMPLE II

Using the same substances as in Example I, a mixture was formed from:

| | |
|---|---|
| 26.4% by weight | of water, |
| 0.3% by weight o | f anti-foaming agent, |
| 0.1% by weight | of preservative, |
| 2.8% by weight | of surfactant, and |
| 40.2% by weight | of binder emulsion. |

This mixture was admixed with 30.2% by weight of PV-Echtgelb HG, the said pigment being dispersed with the aid of a bead mill to a maximum particle size of 10 microns in the form of a stable paste. The paste was sprayed, and pigment concentrate particles were obtained which consisted of 60.0% by weight of pigment, 34.4% by weight of binder and 5.6% by weight of surfactant.

In the course of the pigment concentrate particles obtained being processed into a yellow powder coating for industrial applications, the pigment concentrate particles were found to be eminently compatible with the raw materials customary for a powder coating.

Furthermore it was found that the powder coating thus formed no longer had a tinting strength reserve.

### EXAMPLE III

Using the same substances as in Example I, a mixture was formed from:

| | |
|---|---|
| 33.0% by weight | of water, |
| 0.3% by weight | of anti-foaming agent, |
| 0.1% by weight | of preservative, |
| 4.2% by weight | of surfactant, and |
| 34.1% by weight | of binder emulsion. |

This mixture was admixed with 28.3% by weight of PV-Rot HG, the said pigment being dispersed with the aid of a bead mill to a maximum particle size of 10 microns to obtain a stable paste. The paste was subjected to spray-drying, and pigment concentrate particles were obtained which consisted of 60.0% by weight of pigment, 31.2% by weight of binder and 8.8% by weight of surfactant.

Red powder coating formed by using the pigment concentrate particles obtained had excellent characteristics.

### EXAMPLE IV

Using the same substances as in Example I, a mixture was formed from:

| | |
|---|---|
| 18.2% by weight | of water, |
| 0.3% by weight | of anti-foaming agent, |
| 0.1% by weight | of preservative, |
| 3.5% by weight | of surfactant, and |
| 39.7% by weight | of binder emulsion. |

The mixture formed was admixed with 38.2% by weight of Phthalogreen 3G 220, the said pigment being dispersed with the aid of a bead mill to a maximum particle size of 10 microns to form a stable paste. The paste was sprayed, and pigment concentrate particles were obtained which consisted of 65.0% by weight of pigment, 29.1% by weight of binder and 5.9% by weight of surfactant.

Green powder coating formed by using the pigment concentrate particles obtained had excellent characteristics.

### EXAMPLE V

Using the same substances as in Example I, a mixture was formed from:

| | |
|---|---|
| 28.6% by weight | of water, |
| 0.3% by weight | of anti-foaming agent, |
| 0.1% by weight | of preservative, |
| 4.3% by weight | of surfactant, and |
| 36.6% by weight | of binder emulsion. |

The mixture formed was admixed with 30.1% by weight of Printex 75, the said pigment being dispersed with the aid of a bead mill to a maximum particle size of 10 microns, to obtain a stable paste. The paste was sprayed, and pigment concentrate particles were obtained which consisted of 60.0% by weight of pigment, 31.3% by weight of binder and 8.7% by weight of surfactant.

The pigment concentrate particles thus formed were found to be eminently compatible with the raw materials customary for preparing a (black) powder coating.

### EXAMPLE VI

A mixture was formed from

| | |
|---|---|
| 37.2% by weight | of water, additives consisting of: |
| 0.2% by weight | of anti-foaming agent (Nopco NXZ), and |
| 0.1% by weight | of preservative, dispersant consisting of: |
| 2.7% by weight | of phosphate ester (Serad FA 192, trade name of Servo), and |
| 0.3% by weight | of sodium salt of a polyelectrolyte (Orotan 731, trade name of Röhm GmbH) and |
| 22.4% by weight | of binder, consisting of a 90% strength aqueous emulsion of a polyurethane polyol (K-Flex UD 320 W, trade name of King Industries). |

This mixture was admixed with 37.3% by weight of Heliogen blue K 6911 D (trade name of BASF), the said pigment being dispersed in a bead mill to a maximum particle size of 10 microns to form a stable paste. The paste was sprayed, and pigment concentrate particles having the same favourable characteristics as the concentrate particles prepared in the previous examples were obtained.

It should be noted that for comparison purposes the binder used was an aqueous emulsion of a non-drying alkyd resin and an oil-free alkyd resin instead of the polyester resin and polyurethane polyol employed in the previous examples. Such emulsions are commercially distributed, for example, by Worlee under the designation Worleesol 84 (a non-drying alkyd resin with a dry substance content of 44%) and Worleepol V450 and Worleepol 808 (both oil-free alkyd resins with dry substance contents of 90% and 98%, respectively). The results which were obtained with the pigment concentrates thus formed were completely comparable with the concentrates obtained on the basis of a polyester resin or a polyurethane polyol.

## Claims

1. A method for preparing a pigment concentrate by comminution of pigment particles in the presence of an aqueous binder having a co-solvent content of 0-5%, and a dispersant, to form a stable paste or suspension, subjecting the paste or suspension formed to a drying treatment and collection of the pigment concentrate, **characterized in that,** a binder having a glass transition temperature of from 25 to 55°C is used to form said paste or suspension, to obtain a pigment concentrate consisting of pigment, binder and dispersant.

2. A method according to claim 1, **characterized in that** the binder used is a resin.

3. A method according to claim 1 or 2, **characterized in that** the binder used is a polyester resin, an epoxy resin, an alkyd resin, a polyurethane resin or a combination thereof.

4. A method according to claims 2 or 3, **characterized in that** a saturated polyester resin having an acid value of from 20 to 55, preferably 20-30, is used.

5. A method according to claim 1, **characterized in that** the dispersant used is a surfactant having an HLB value of from 10 to 18, preperably from 13 to 17.

6. A method according to claims 1 or 5, **characterized in that** the dispersant used is a nonionic surfactant, selected from the group consisting of the ethoxylated fatty alcohols, the ethoxylated nonylphenols and the ethylene oxide/propylene oxide copolymers and block copolymers.

7. A method according to claims 1 or 5, **characterized in that** the dispersant used is an anionic surface-active phosphate ester or a sodium or ammonium salt of a polyelectrolyte.

8. A method according to one or more of the claims 1 to 7, **characterized in that** the pigment particles are comminuted, with the use of a bead mill, to a particle size of less than 15 µm.

9. A method according to one or more of the claims 1 to 8, **characterized in that** the pigment used is an organic pigment, in particular selected from carbon black, phthalocyanine green, phthalocyanine blue, organic red and organic yellow.

10. A pigment concentrate obtained with the use of the method according to one or more of the claims 1 to 9.

11. A method for forming a powder to be used as a powder coating, by mixing a pigment with a thermoplastic or thermosetting plastic, a hardener and additives, by blending, melting, extruding and finely grinding the mixture into a powder, **characterized in that** the pigment used is a pigment concentrate according to claim 10.

12. A method for coating a substrate with a powder coating by mixing pigment particles with a thermoplastic or thermosetting plastic, a hardener and additives, melting and extruding the mixture formed, comminuting the extrudate formed into a powder, applying the powder obtained to a substrate in the form of a thin layer and letting said thin layer harden with the formation of a thin film, **characterized in that** the pigment particles used are pigment concentrate particles obtained according to the method according to one or more of claims 1 to 9.

## Patentansprüche

1. Methode zur Präparation eines Pigmentkonzentrats, indem Pigmentpartikel in Gegenwart eines wässrigen Bindemittels, das ein Colösemittel mit einem Anteil von null bis fünf Prozent enthält, und eines Dispergiermittels zerkleinert werden, um eine stabile Paste oder Suspension zu bilden, worauf die gebildete Paste oder Suspension getrocknet und das Pigmentkonzentrat gesammelt wird, dadurch gekennzeichnet, daß ein Bindemittel mit einer Glasübergangstemperatur zwischen 25 und 55°C für die Bildung der Paste oder Suspension verwendet wird, um ein Pigmentkonzentrat zu erzielen, das aus Pigment, Bindemittel und Dispergiermittel besteht.

2. Methode nach Anspruch 1, dadurch gekennzeichnet, daß das verwendete Bindemittel ein Harz ist.

3. Methode nach Anspruch 1 oder 2, dadurch gekennzeichnet, daß das verwendete Bindemittel ein Polyesterharz, ein Epoxyharz, ein Alkydharz, ein Polyurethanharz oder eine Kombination dieser Harze ist.

4. Methode nach Anspruch 2 oder 3, dadurch gekennzeichnet, daß ein gesättigtes Polyesterharz mit einem Säurewert zwischen 20 und 55, vorzugsweise zwischen 20 und 30 verwendet wird.

5. Methode nach Anspruch 1, dadurch gekennzeichnet, daß das verwendete Dispergiermittel ein Tensid mit einem HLB-Wert von zwischen 10 und 18, vorzugsweise zwischen 13 und 17, ist.

6. Methode nach Anspruch 1 oder 5, dadurch gekennzeichnet, daß das verwendete Dispergiermittel ein nichtionisches Tensid ist, das aus der Gruppe ausgewählt wird, die aus den ethoxylierten Fettalkoholen, ethoxylierten Nonylphenolen, den Ethylenoxid- und Propylenoxidcopolymeren und Blockcopolymeren hierfür besteht.

7. Methode nach Anspruch 1 oder 5, dadurch gekennzeichnet, daß das Dispergiermittel ein anionischer oberflächenaktiver Phosphatester oder ein Natrium- oder Ammoniumsalz eines Poly-Elektrolyten ist.

8. Methode nach einem oder mehreren der Ansprüche 1 bis 7, dadurch gekennzeichnet, daß die Pigmentpartikel mithilfe einer Kugelmühle auf eine Korngröße von unter 15 µm zerkleinert werden.

9. Methode nach einem oder mehreren der Ansprüche 1 bis 8, dadurch gekennzeichnet, daß das verwendete Pigment ein organisches Pigment ist, insbesondere Kohlenstoffruß, Phthalocyaningrün, Phthalocyaninblau, Organorot oder Organogelb ist.

10. Pigmentkonzentrat, das unter Verwendung der Methode nach einem oder mehreren der Ansprüche 1 bis 9 erhalten wurde.

11. Methode zur Bildung eines Pulvers, das für Pulverbeschichtungen verwendet wird, indem ein Pigment mit einem thermoplastischen oder thermisch aushärtbaren Kunststoff, einem Härter und Zusätzen gemischt wird, worauf die gebildete Mischung geschmolzen und extrudiert und dann das extrudierte Material zu einem Pulver fein zermahlen wird, dadurch gekennzeichnet, daß das verwendete Pigment ein Pigmentkonzentrat nach Anspruch 10 ist.

12. Methode für die Beschichtung eines Substrats mit einem Beschichtungspulver, indem Pigmentpartikel mit einem thermoplastischen oder thermisch aushärtbaren Kunststoff, einem Härter und Zusätzen gemischt werden, indem die gebildete Mischung geschmolzen und extrudiert und dann das extrudierte Material zu einem Pulver zerkleinert wird, indem dieses erhaltene Pulver auf ein Substrat in Form einer dünnen Schicht aufgebracht wird und indem man diese Schicht unter Bildung eines dünnen Films aushärten läßt, dadurch gekennzeichnet, daß die verwendeten Pigmentpartikel Pigmentkonzentratpartikel sind, die gemäß der Methode nach einem oder mehreren der Ansprüche 1 bis 9 erhalten wurden.

## Revendications

1. Procédé pour préparer un concentré pigmentaire par broyage de particules pigmentaires en présence d'un liant aqueux ayant une teneur de co-solvant de 0 à 5 %, et d'un dispersant, pour former une pâte ou une suspension stable, qui consiste à soumettre la pâte ou la suspension formée à un traitement de séchage, le concentré pigmentaire étant recueilli ensuite, caractérisé en ce qu'on utilise un liant ayant une température de transition vitreuse de 25 à 55°C pour former ladite pâte ou ladite suspension, dans le but d'obtenir un concentré pigmentaire constitué d'un pigment, d'un liant et d'un dispersant.

2. Procédé selon la revendication 1, caractérisé en ce que le liant utilisé est une résine.

3. Procédé selon la revendication 1 ou 2, caractérisé en ce que le liant utilisé est une résine de polyester, une résine époxyde, une résine alkyde, une résine de polyuréthanne ou une de leurs combinaisons.

4. Procédé selon les revendications 2 ou 3, caractérisé en ce qu'on utilise une résine de polyester saturée ayant un indice d'acide de 20 à 55 et de préférence de 20 à 30.

5. Procédé selon la revendication 1, caractérisé en ce que le dispersant utilisé est un tensioactif ayant un indice HLB de 10 à 18 et de préférence de 13 à 17.

6. Procédé selon les revendications 1 ou 5, caractérisé en ce que le dispersant utilisé est un tensioactif nonionique choisi dans l'ensemble comprenant les alcools gras éthoxylés, les nonylphénols éthoxylés et les copolymères et copolymères séquencés oxyde d'éthylène/oxyde de propylène.

7. Procédé selon les revendications 1 ou 5, caractérisé en ce que le dispersant utilisé et un ester phosphate tensioactif anionique ou un sel de sodium ou d'ammonium d'un polyélectrolyte.

8. Procédé selon l'une ou plusieurs des revendications 1 à 7, caractérisé en ce que les particules pigmentaires sont broyées par utilisation d'un broyeur à billes jusqu'à une granulométrie inférieure à 15 µm.

9. Procédé selon l'une ou plusieurs des revendications 1 à 8, caractérisé en ce que le pigment utilisé est un pigment organique, en particulier choisi parmi le noir de carbone, le vert de phtalocyanine, le bleu de phtalocyanine, le rouge organique et le jaune organique.

10. Concentré pigmentaire obtenu par utilisation du procédé selon l'une ou plusieurs des revendications 1 à 9.

11. Procédé pour former une poudre destinée à être utilisée en tant que peinture en poudre, par mélange d'un pigment à un matériau thermoplastique ou thermodurcissable, un durcisseur et des additifs, par mélange, fusion, extrusion et broyage fin de mélange pour donner une poudre, caractérisé en ce que le pigment utilisé est un concentré pigmentaire selon la revendication 10.

12. Procédé pour appliquer sur un subjectile une peinture en poudre, qui consiste à mélanger des particules pigmentaires à un matériau thermoplastique ou thermodurcissable, un durcisseur et des additifs, à faire fondre et extruder le mélange ainsi formé, à broyer l'extrudât formé pour donner une poudre, à appliquer la poudre ainsi obtenue sur un subjectile sous forme d'une couche mince, et à laisser cette couche mince durcir avec formation d'un feuil mince, caractérisé en ce que les particules pigmentaires utilisées sont des particules du concentré pigmentaire obtenu selon le procédé de l'une quelconque des revendications 1 à 9.
